Europäisches Patentamt

European Patent Office

Office européen des brevets

(19)

(11) Numéro de publication: **0 070 208**
**B1**

## (12) FASCICULE DE BREVET EUROPEEN

(45) Date de publication du fascicule du brevet:
**04.09.85**

(51) Int. Cl.⁴: **B 23 Q 16/10,** B 23 B 31/40

(21) Numéro de dépôt: **82401047.4**

(22) Date de dépôt: **09.06.82**

(54) **Perfectionnements aux machines outils à tête pivotante.**

(30) Priorité: **17.06.81 FR 8111914**

(43) Date de publication de la demande:
**19.01.83 Bulletin 83/3**

(45) Mention de la délivrance du brevet:
**04.09.85 Bulletin 85/36**

(84) Etats contractants désignés:
**AT BE CH DE GB IT LI LU NL SE**

(56) Documents cités:
**CH - A - 376 721**
**DE - A - 2 309 332**
**DE - A - 2 460 368**
**DE - B - 1 235 707**
**DE - C - 1 037 809**
**DE - C - 1 527 066**
**FR - A - 2 031 830**
**FR - A - 2 122 293**
**FR - A - 2 378 593**
**US - A - 2 660 074**
**US - A - 3 453 910**

(73) Titulaire: **CENTRE D'ETUDES DU FRAISAGE (C.E.F.),**
**80 rue des Meuniers, F-92220 Bagneux (FR)**

(72) Inventeur: **Sachot, Michel, 55, rue Curie, F-91400 Saclay**
**(FR)**

(74) Mandataire: **Loyer, Yves et al, CABINET PIERRE**
**LOYER 18, rue de Mogador, F-75009 Paris (FR)**

## Description

L'invention se rapporte aux machines-outils comportant un support tel qu'un bélier coulissant, supportant une tête porte-broches pivotante, dont la rotation est commandée automatiquement, et qui doit être verrouillée de façon précise en au moins deux positions correspondant par exemple à une rotation de 180° de la tête, l'une de ces positions pouvant être utilisée pour réaliser un changement automatique d'outil.

Une tête de ce genre peut être monobroche ou multibroche et il est connu, notamment par les brevets US-A-3 238 615 et US-A-3 448 656 de réaliser une tête pivotante selon un axe incliné à 45° par rapport au plan de travail horizontal de la table, munie d'une commande automatique de rotation par pignon et couronne et de moyens de verrouillage en deux positions correspondant à une rotation de 180° de la tête par l'introduction, sous commande hydraulique, d'un doigt porté par le support dans un logement de la tête pivotante et application de la tête pivotante contre son support (chariot ou bélier).

Il est d'autre part connu d'assurer la précision de l'indexage au moyen de douilles expansibles portées par le doigt d'indexation et qui assurent une coaxialité très parfaite entre les alésages des plateaux fixe et mobile. Un tel dispositif est décrit au brevet de la République Fédérale d'Allemagne 2 460 368 au nom de Scharmann & Co et au brevet FR-A-2 122 293 au nom de l'état français.

Dans le brevet français 2 031 830, on a proposé une tourelle avec un dispositif d'indexage de précision dans lequel la tourelle pivote sur son support suivant une face plane perpendiculaire à l'axe de rotation et il est prévu des moyens d'entraînement en rotation et des pièces de commande et d'indexage présentant une partie mâle et une partie femelle portées respectivement par la tourelle et le support ainsi que des moyens d'introduction des parties mâles dans les parties femelles. Ce document a servi de base pour l'élaboration du préambule de la revendication 1.

Mais dans ce brevet l'axe de rotation est géométrique et fixe, les pièces d'indexage et de commande sont en nombre égal sur tourelle et support et ont des formes conjuguées et délimitées par une face d'appui parallèle à l'axe géométrique et par une rampe inclinée, leur fonction étant en effet d'immobiliser la tourelle en rotation autour de son axe.

Cependant, la précision de ces moyens est limitée par la précision d'usinage des pièces, et lorsqu'il s'agit de pièces rotatives, par la précision de définition de l'angle de rotation. Or il est nécessaire, pour la réalisation de machines modernes à commande automatique, d'obtenir des précisions supérieures à celles qui peuvent être ainsi réalisées.

La présente invention est relative à des perfectionnements permettant d'obtenir une telle précision avec des moyens de fabrication simples et sûrs.

Conformément à l'invention la tête pivote sur son support selon une surface plane, perpendiculaire à son axe de rotation, ayant la forme d'un disque mobile plan solidaire de la tête glissant sur un disque fixe plan solidaire du support, les disques fixes et mobiles étant percés d'alésages de même diamètre et entraxes, et des moyens étant prévus pour appliquer la tête avec pression contre le support après indexage et elle est caractérisé en ce que:

. Le disque fixe comporte au plus un seul couple d'alésages diamétralement opposés dans lequel coulisse un couple de douilles d'indexage par bagues expansibles connues en soi.

. Le disque mobile est percé d'au moins un couple d'alésages diamétralement opposés, l'égalité de diamètre et entraxe avec le disque fixe étant absolument rigoureuse.

. Le disque mobile solidaire de la tête est entraîné en rotation par des moyens assurant un centrage comportant un jeu prédéterminé.

. Des moyens d'arrêts de rotation, en position définie, tels que des butées, sont prévus, et sont disposés de façon à autoriser le rappel du disque mobile en position d'indexage par l'entrée en jeu des douilles expansibles.

. L'indexation est réalisée par introduction et expansion simultanée des deux bagues expansibles portées par le disque fixe dans l'un des couples d'alésages du disque mobile, le disque mobile étant rappelé en position d'indexage, grâce au jeu prévu dans la commande de son entraînement et à celui des moyens d'arrêt de rotation, dans une position correspondant à la coaxialité rigoureuse d'un des couples d'alésages du disque mobile avec le couple unique d'alésages du disque fixe.

En effet, le perçage simultané de deux alésages dans deux disques superposés est une opération qui peut être réalisée de façon simple avec une grande précision, et la concordance de ces mêmes alésages après rotation de l'un des disques assure l'exactitude géométrique absolue à 180° de cette rotation autour d'un axe de rotation situé à mi-distance des axes des deux alésages. En prévoyant que la rotation des disques est effectuée par des moyens de centrage comportant un jeu prédéterminé suffisant, il n'est plus nécessaire de déterminer avec précision l'axe de rotation, et l'angle de 180° est obtenue avec la rigueur maximale par la coïncidence des alésages des disques.

L'invention vise également les dispositions ci-après:

Les bagues expansibles sont intérieurement tronconiques et montées sur des pièces tronconiques portées par les tiges des vérins, des moyens de butées étant prévus pour arrêter l'avance des bagues avant la fin de course des tiges des vérins portant les bagues.

Les moyens de butées des bagues sont portés par une tige coulissant à travers les pistons des vérins et dont l'extrémité arrière porte un collier coagissant en fin de course avec une butée portée par le cylindre de vérin.

Les disques fixe et mobile portent sur leur plan de glissement des parties saillantes qui forment butées de fin de course, placées de façon à permettre au disque mobile d'effectuer une rotation légèrement supérieure à 180° afin que les butées en contact à la fin de la rotation du disque mobile s'écartent l'une de l'autre sous l'effet du rappel en position obtenu par les bagues expansibles.

Deux interrupteurs de fin de course sont placés dans le support correspondant aux deux positions à 180°, chaque interrupteur agissant lorsque les butées des disques sont séparées par une faible distance et provoquant l'arrêt du dispositif de commande de rotation de la tête.

Après une temporisation d'une fraction de seconde, le dispositif de commande de rotation de la tête est de nouveau actionné et le disque mobile est de nouveau entraîné en rotation jusqu'au contact avec la butée fixe.

L'action sur un interrupteur de fin de course provoque, avec une temporisation, l'introduction des bagues expansibles dans les alésages des disques.

La fin de course des tiges de vérin provoquant l'introduction des bagues expansibles agit sur un interrupteur qui commande l'arrêt de la commande de rotation de la tête et l'action du dispositif de blocage de la tête, tandis que l'extraction des bagues expansibles hors des alésages agit sur un interrupteur électrique provoquant le déblocage de la tête tournante et autorise la commande de rotation de la tête.

Un vérin annulaire alimenté en pression hydraulique assure le blocage de la tête sur son support avec un effort supérieur aux composantes des forces dues aux efforts d'usinage, un clapet anti-retour situé sur l'alimentation du vérin assurant le maintien de cette pression en cas de défaillance du circuit hydraulique.

La rotation de la tête est commandée par un moteur hydraulique et un réducteur à engrenage antraînant un pignon agissant sur une couronne dentée portée par la tête.

L'invention est décrite plus amplement ci-après avec références aux dessins annexés sur lesquels on a représenté figures 1 à 7, un exemple d'application de l'invention à une tête monobroche avec rotation de 180° et figures.

La figure 1 est une coupe schématique partielle selon B-B de la figure 2 de l'ensemble de la tête et de son support;

la figure 2 est une vue de détail en coupe selon C-C de la figure 3 du moyen d'indexage à bague expansible selon l'invention;

la figure 3 est une vue selon A-A de la figure 1;

les figures 4, 5 et 6 illustrent en coupe axiale et en vue de bout, une bague expansible;

la figure 8 représente l'épure des disques fixe et mobile d'une variante d'application de l'invention;

la figure 9 représente une épure des disques fixe et mobile conforme à l'invention, pour une application dans laquelle il est prévu trois positions d'indexage à 120° l'une de l'autre.

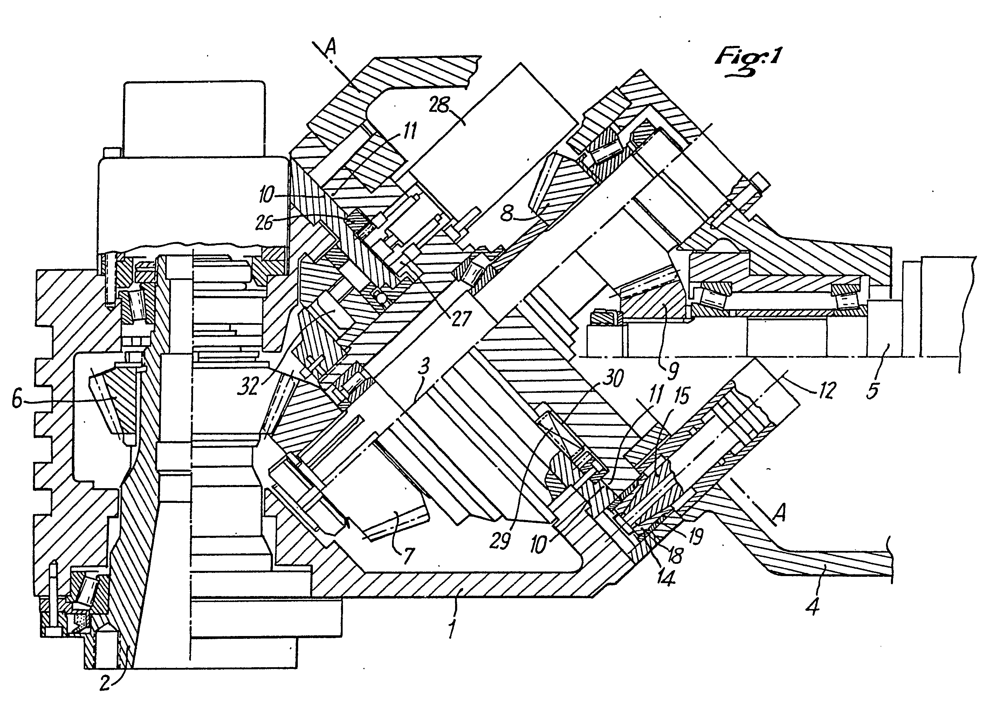

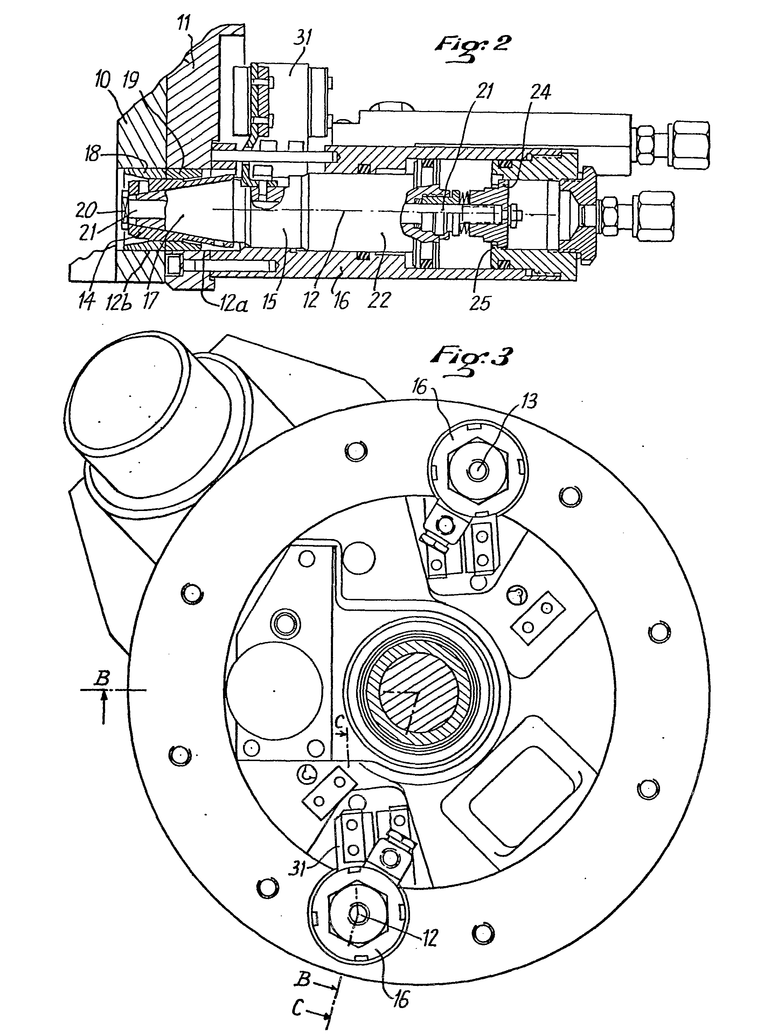

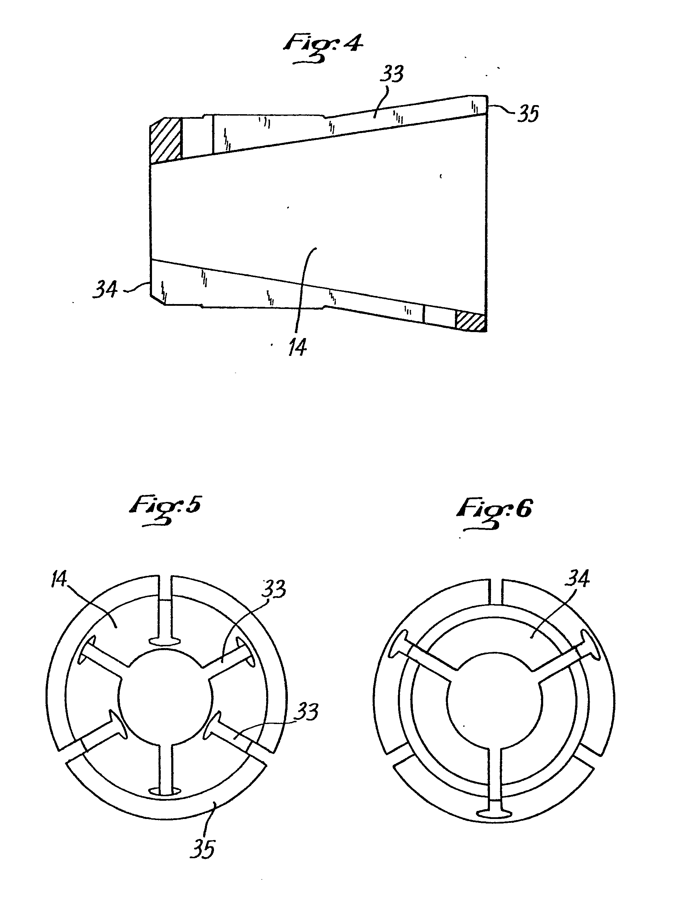

L'exemple de réalisation représenté aux figures 1 à 7 se rapporte à une tête monobroche du type tête universelle HURÉ, dans laquelle la broche est en position de travail quelle que soit son orientation par rapport au support ou chariot porte-tête; mais cette réalisation est applicable aussi bien à une tête pivotante monobroche d'un autre type, qu'à une tête multibroche telle que celle décrite au brevet US-A-3 238 615 et ceci, quel que soit l'angle d'inclinaison ou de l'axe de rotation de la tête par rapport à l'horizontale.

Dans l'exemple représenté aux figures 1 à 6, cet angle d'inclinaison est de 45° et la rotation nécessaire pour passer de la position horizontale de la broche à sa position verticale doit être exactement de 180°.

Sur les figures du dessin annexé, on voit que la tête 1 qui porte la broche 2 pivote selon un axe 3 sur le support ou chariot 4. La broche 2 est entraînée à partir de l'arbre principal 5 par les pignons 6, 7, 8, 9, de façon connue.

Conformément à l'invention, la tête 1 pivote sur le support 4 selon une face plane 10, en forme de disque annulaire perpendiculaire à l'axe 3, qui glisse sur la face plane 11 portée par le support également en forme de disque annulaire perpendiculaire à l'axe 3.

Au cours de la fabrication, les disques 10 et 11 sont percés simultanément de deux alésages d'axes diamétralement opposés 12 et 13 et de diamètres égaux. Du fait de ce perçage simultané des deux disques, on obtient une rigoureuse coïncidence des alésages après pivotement à 180° absolu du disque mobile, pour autant que les moyens de rotation et de centrage des disques 10 et 11 laissent un jeu et que l'indexage précis soit réalisé par la mise en coïncidence coaxiale des alésages.

Cette mise en coïncidence est réalisée par le moyen des bagues expansibles 14 qui, au terme de la rotation du disque mobile 10 sont introduites dans les alésages et expansées.

Sur les figures 1 et 2 de l'exemple représenté, les bagues expansibles 14 sont portées par l'extrémité des tiges 15 de deux vérins hydrauliques 16 montées dans le support 4 concentriquement aux alésages d'indexage 12, 13 du disque fixe.

En se reportant à la figure 2, on voit que l'extrémité 17 d'un vérin est conique et que la bague 14 est intérieurement conique; de préférence, les alésages 12a (disque fixe) et 12b (disque mobile) sont eux-mêmes munis de bagues 18, 19 en acier trempé, ajustées sans contraintes et immobilisées, dont les diamètres intérieurs ont été rectifiés ensemble.

Une fois la bague 14 introduite par le vérin 16 dans sa position d'indexage, son avance est arrêtée par la butée 20 portée par la tige 21 qui traverse le piston 22 et porte à sa partie arrière un collier 24 qui coopère, en fin de course, avec le redent 25 du cylindre 16 formant butée; la poursuite de l'avance du piston 22 provoque alors un enfoncement du cône 17 dans la bague 14 et son expansion, ce qui assure un indexage rigoureux par coïncidence des axes des alésages 12a et 12b.

Ceci suppose toutefois que les disques d'indexage 10 et 11 sont maintenus concentriques pendant la rotation de la tête par des moyens de rotation et de centrage dont le jeu est suffisant pour ne pas contrarier le rappel en position obtenu par les bagues expansibles. La réalisation de cette caractéristique est à la portée de l'homme de l'art qui dispose de moyens de transmission connus dont les jeux peuvent être déterminés.

Dans l'exemple représenté, la transmission adoptée est du type dans lequel une couronne dentée 26 portée par le disque mobile 10 est entraînée par le pignon 27 entraîné par le moteur hydraulique 28.

Conformément à l'invention, les disques 10 et 11 portent sur leur plan de glissement des parties saillantes 29, 30 qui forment butées de fin de course et qui sont placées de façon à permettre au disque mobile 10 une rotation légèrement supérieure à 180° de sorte que les butées en contact s'écartent lors de l'effet de rappel en position rigoureuse obtenu par les bagues 14.

L'énergie cinétique et les résistances passives déterminent la position et le temps d'arrêt de la tête. Après une temporisation de 0,15 seconde environ, le dispositif de commande de rotation de la tête est de nouveau actionné, le disque mobile solidaire de la tête est entraîné en rotation jusqu'au contact avec la butée fixe. La position de l'interrupteur électrique sur la course du disque mobile est calculée pour que sous l'effet de faibles résistances passives, l'énergie cinétique de la tête au moment du contact des butées de fin de course mécanique soit négligeable tandis que sous l'effet de résistances passives maximum, l'arrêt de la tête se produira pour un écartement des butées mécaniques inférieur à la distance nécessaire à l'accélération de la tête jusqu'à la vitesse correspondant à la puissance du dispositif de commande.

L'action sur l'interrupteur électrique de fin de course de rotation autorise après une temporisation l'introduction des bagues expansibles dans les alésages des disques. L'action sur l'interrupteur électrique de fin de course informe le dispositif de commande de la machine de la position horizontale ou verticale de la broche.

Les fins de course des vérins 16 sont détectés par des interrupteurs électriques 31 qui autorisent:
— Lorsque le bagues expansibles sont introduites dans les alésages:
a) l'arrêt commande rotation tête,
b) le blocage tête.
— Lorsque les bagues expansibles sont extraites des alésages:
a) le déblocage tête,
b) la commande rotation tête.

Un ensemble de ressorts maintient les disques d'indexage en contact pendant la rotation de la tête sous un effort supérieur à la composante de séparation des disques due au poids de la tête et de l'outil.

Un vérin annulaire 32 alimenté en pression hydraulique assure, lorsque l'indexage est réalisé par les bagues 14, le blocage de la tête sur le chariot porte-tête de la machine avec un effort supérieur aux composantes dues aux efforts d'usinage.

Les bagues expansibles 14 seront de préférence réalisées comme représenté figures 4, 5 et 6, c'est-à-dire avec des fentes longitudinales 33 réparties sur leur périphérie, supérieures en longueur à la demi-longueur de la bague et alternativement réalisées à partir de l'une et l'autre extrémité 34, 35 de la bague.

Comme le montre la figure 8, l'invention n'est pas limitée au cas ou l'indexation recherchée correspond à deux positions à 180° l'une de l'autre. N'importe quel écart angulaire peut être adopté entre deux positions d'indexage et le nombre des positions est quelconque.

Selon l'invention en effet, le disque fixe 11 porte deux alésages 12, 13 et le disque mobile 10 porte autant de couples d'alésages 121 et 131, 122 et 132, 123 et 133 qu'il y a de positions d'indexage recherchées.

Les deux alésages de chacun de ces couples ont rigoureusement les mêmes diamètres $d_{12}$, $d_{13}$ que les

alésages correspondant 12, 13 et leur entr'axe D qui les sépare est rigoureusement le même que celui des alésages 12, 13; leur distance au centre $C_{10}$ est égale à la distance des alésages 12, 13 au centre $C_{11}$ dans les limites du jeu prévu; les positions géométriques des alésages d'un couple tel que 121, 131 se déduisent de celles d'un autre couple 122, 132 ou 123, 133 par une rotation correspondant à l'écart angulaire recherché entre les positions d'indexage; le disque mobile 10 est entraîné à rotation par des moyens assurant le centrage du disque 10 par rapport au disque 11 avec le jeu précité. En face de chaque alésage 12, 13 le support de la tête comporte un moyen permettant d'enfoncer et d'expanser une bague expansible comme décrit et représenté avec références aux figures 1 à 6.

Ainsi, l'indexage rigoureux est obtenu par la mise en place et l'expansion des bagues, le disque 10 étant rappelé, grâce au jeu prévu dans la commande de son entraînement, dans une position correspondant à la coaxiabilité rigoureuse d'un des couples 121, 131, ou 122, 132 ou 123, 133 avec le couple 12, 13.

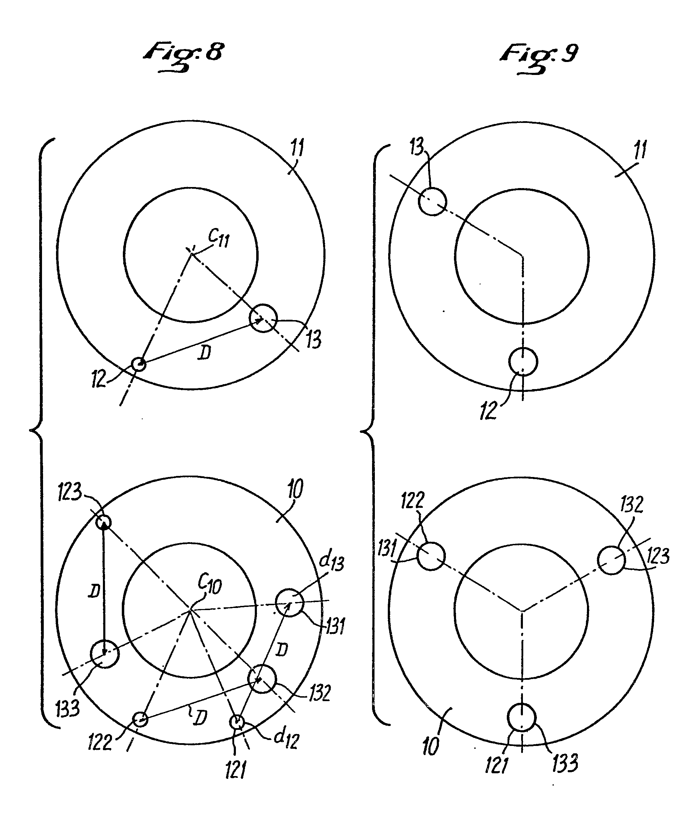

La figure 9 représente une épure de positionnement des alésages des disques fixe et mobile pour en cas où les positions d'indexation recherchées sont à 120° l'une de l'autre.

Dans cet exemple, les couples 121, 131 d'une part 122, 132 d'autre part 123, 133 enfin, se superposent en ce sens que chacun des alésages du disque 10 appartient à deux couples comme représenté. Dans ce cas, les alésages 12, 13 du disque fixe 11 ont rigoureusement même diamètre de même que tous les alésages du disque mobile 10.

D'autres dispositions peuvent encore être adoptées.

Dans le cas des exemples des figures 8 et 9, la fin de course de la rotation de la tête d'une position à l'autre pourra être déterminée par des détecteurs électriques de position dont l'un arrête la rotation rapide et l'autre assure l'arrêt précis précédent l'entrée en jeu des bagues expansibles. Tout autre dispositif de détection de position angulaire en vue de commander l'arrêt de la rotation peut être adopté.

Les dispositifs de l'invention s'appliquent particulièrement aux machines qui comportent un changeur d'outil et pour lesquelles il est nécessaire de donner à la tête mobile des positions d'indexage précis tant pour les positions de travail que pour les positions de changement d'outil.

**Revendications**

1. Machine-outil du type à tête porte-broche pivotante dont la rotation et le verrouillage en au moins deux positions d'indexage précis sont commandés automatiquement, comprennant une tête (1) pivotant sur son support (4) selon une face plane perpendiculaire à l'axe de rotation (3) ayant la forme d'un disque mobile plan (10) solidaire de la tête (1) glissant sur un disque fixe plan (11) solidaire du support (4), le disque fixe étant percé d'alésages et le disque mobile, solidaire de la tête, percée d'au moins un couple d'alésages, les deux alésages d'un tel couple ayant le même diamètre et la même distance entre eux que ceux du disque fixe, des moyens étant prévus pour appliquer avec pression la tête (1) contre le support (4) après indexage, caractérisée en ce que:

. le disque fixe (11) comporte au plus un seul couple d'alésages (12,13) diamétralement opposés dans lequel coulisse un couple de douilles d'indexage par bagues expansibles (14) connues en soi,

. le disque mobile est percé d'au moins un couple d'alésages (12b, 13b) diamétralement opposés, l'égalité de diamètre et entraxe avec le disque fixe étant absolument rigoureuse,

. Le disque mobile (10) solidaire de la tête (1) est entraîné en rotation par des moyens assurant un centrage comportant un jeu prédéterminé,

. des moyens d'arrêts de rotation, en position définie, tels que des butées, sont prévus, et sont disposés de façon à autoriser le rappel du disque mobile en position d'indexage par l'entrée en jeu des douilles expansibles,

. l'indexation est réalisée par introduction et expansion simultanée des deux bagues expansibles (14) portées par le disque fixe (11) dans l'un des couples d'alésages du disque mobile, le disque mobile étant rappelé en position d'indexage, grâce au jeu prévu dans la commande de son entraînement et à celui des moyens d'arrêt de rotation, dans une position correspondant à la coaxialité rigoureuse d'un des couples d'alésages du disque mobile avec le couple unique d'alésages du disque fixe.

2. Machine-outil selon la revendication 1, caractérisée en ce que les bagues expansibles (14) sont intérieurement tronconiques et montées sur des pièces tronconiques (17) portées par les tiges (15) des vérins (16), des moyens de butées (20) étant prévus pour arrêter l'avance des bagues (14) avant la fin de course des tiges (15) des vérins (16) portant les bagues (14), lesdits moyens de butées (20) des bagues (14) étant portés par une tige (21) coulissant à travers les pistons (22) des verins (16) et dont l'extrémité arrière porte un collier (24) coagissant en fin de course avec une butée (25) portée par le cylindre du vérin (16).

3. Machine-outil selon l'une quelconque des revendications précédentes, caractérisée en ce que les disques d'indexage portent sur leur plan de glissement des parties saillantes qui forment butées de fin de course, placées de façon à permettre au disque mobile (10) d'effectuer une rotation légèrement supérieure à 180° afin que les butées en contact à la fin de la rotation du disque mobile s'écartent l'une de l'autre sous l'effet du rappel en position obtenu par les bagues expansibles (14).

4. Machine-outil selon la revendication 3, caractérisée en ce que deux interrupteurs de fin de course sont placés dans le support, l'un correspondant aux deux positions d'indexage, chaque interrupteur agissant lorsque les butées (29, 30) des disques sont séparées par une faible distance et provoquant l'arrêt du dispositif de commande (28) de la rotation de la tête.

5. Machine-outil selon la revendication 4, caractérisée en ce qu'après une temporisation d'une fraction de seconde, le dispositif de commande de rotation de la tête est de nouveau actionné et le disque mobile est de nouveau entraîné en rotation jusqu'au contact avec la butée fixe.

6. Machine-outil selon l'une quelconque des revendications 4 et 5, caractérisée en ce que l'action sur un interrupteur de fin de course provoque, avec une temporisation, l'introduction des bagues expansibles dans les alésages des disques.

7. Machine-outil selon l'une quelconque des revendications précédentes, caractérisée en ce que la fin de course des tiges de vérin provoquant l'introduction des bagues expansibles agit sur un interrupteur qui commande l'arrêt de la commande de rotation de la tête et l'action du dispositif de blocage de la tête, tandis que l'extraction des bagues expansibles hors des alésages agit sur un interrupteur électrique provoquant le déblocage de la tête tournante et autorise la commande de rotation de la tête.

8. Machine-outil selon l'une quelconque des revendications précédentes, caractérisée en ce qu'un vérin annulaire alimenté en pression hydraulique assure le blocage de la tête sur son support avec un effort supérieur aux composantes des forces dues aux efforts d'usinage, un clapet anti-retour étant prévu sur l'alimentation dudit vérin.

9. Machine-outil selon l'une quelconque des revendications précédentes, caractérisée en ce que la rotation de la tête est commandée par un moteur hydraulique et un réducteur à engrenages entraînant un pignon agissant sur une couronne dentée portée par la tête.

**Patentansprüche**

1. Werkzeugmaschine des Typs mit schwenkbarem Spindelkopf, dessen Drehung und Verriegelung in mindestens zwei genau definierte Einraststellungen automatisch gesteuert werden, mit einem Kopf (1), der auf seiner Auflage (4) auf einer ebenen, zur Drehachse (3) senkrechten Fläche in Form einer ebenen, beweglichen, mit dem Kopf (1) verbundenen Scheibe (10) schwenkt, die ihrerseits auf einer ebenen unbeweglichen, mit der Auflage (4) verbundenen Scheibe (11) gleitet, wobei die unbewegliche Scheibe mit Bohrungen versehen ist und die bewegliche, mit dem Kopf verbundene Scheibe mindestens ein Paar Bohrungen aufweist, wobei die zwei Bohrungen eines solchen Paares denselben Durchmesser und denselben Abstand zwischen sich aufweisen, wie die beiden Bohrungen der beweglichen Scheibe, und wobei Mittel vorgesehen sind, um nach dem Verriegeln den Kopf (1) durch Druck gegen die Auflage (4) anzudrücken, dadurch gekennzeichnet, dass

- die unbewegliche Scheibe (11) höchstens ein einziges Paar diametral einander entgegengesetzt angeordneter Bohrungen (12, 13) aufweist, in denen ein Paar Verriegelungsbuchsen gleitet, die ein Verriegeln mittels an sich bekannter ausdehnbarer Ringe (14) ermöglichen,

- die bewegliche Scheibe mindestens ein Paar diametral einander entgegengesetzt angeordneter Bohrungen (12b, 13b) aufweist, wobei die Gleichheit des Durchmessers und des Achsabstandes mit der unbeweglichen Scheibe absolut streng ist,

- die mit dem Kopf (1) verbundene bewegliche Scheibe (10) zu ihrer Drehbewegung durch Mittel angetrieben wird, die eine Zentrierung mit einem vorbestimmten Spiel bewirken,

- Mittel zum Stoppen der Drehbewegung in einer vorbestimmten Stellung, wie Anschläge, vorgesehen und derart angeordnet sind, dass die Rückstellung der beweglichen Scheibe in ihre Verriegelungsstellung durch Betätigung der ausdehnbaren Verriegelungsstellung ermöglicht wird,

- die Verriegelung durch das gleichzeitige Einbringen und Ausdehnen der beiden von der unbeweglichen Scheibe (11) getragenen ausdehnbaren Ringe (14) in eines der Bohrungspaare der beweglichen Scheibe bewirkt wird, wobei die bewegliche Scheibe aufgrund des in ihrem Antrieb sowie in den Mitteln zum Stoppen der Drehbewegung vorgesehenen Spiels in ihre Verriegelungsstellung zurückgestellt wird in einer Position, die einer strengen Koaxialität eines der Bohrungspaare der beweglichen Scheibe mit dem einzigen Bohrungspaar der unbeweglichen Scheibe entspricht.

2. Werkzeugmaschine nach Anspruch 1, dadurch gekennzeichnet, dass die ausdehnbaren Ringe (14) innen kegelstumpfförmig ausgebildet und auf kegelstumpfförmigen Stücken (17) montiert sind, die von den Stangen (15) der Zylinder (16) getragen werden, wobei Anschlagmittel (20) vorgesehen sind, um vor dem Ende des Hubs der Stangen (15) der die Ringe (14) tragenden Zylinder (16) den Vorschub der Ringe (14) zu stoppen, und dass die genannten Anschlagmittel (20) der Ringe (14) von einer Stange (21) getragen werden, die durch die Kolben (22) der Zylinder (16) hindurchgleitet und deren hinteres Ende einen Ringflansch (24) trägt, der am Hubende mit einem von dem Kolben des Zylinders (16) getragenen Anschlag (25) zusammenwirkt.

3. Werkzeugmaschine nach einem der vorangehenden Ansprüche, dadurch gekennzeichnet, dass die Scheiben zum Verriegeln auf ihrer Gleitfläche Vorsprünge aufweisen, die Anschläge für den Verstellweg bilden und derart angeordnet sind, dass sie der beweglichen Scheibe (10) eine Drehung von etwas über 180° ermöglichen, damit die Anschläge, die am Ende der Drehbewegung der beweglichen Scheibe miteinander in Kotankt kommen, infolge der durch die ausdehnbaren Ringe (14) bewirkten Rückstellung sich wieder voneinander entfernen.

4. Werkzeugmaschine nach Anspruch 3, dadurch gekennzeichnet, dass in der Auflage zwei Verstellweg-Schalter angeordnet sind, von denen der eine den beiden Verriegelungsstellungen entspricht, wobei jeder Schalter ausgelöst wird, wenn der Abstand zwischen den Anschlägen (29, 30) der Scheiben gering ist, und den Stop der Antriebseinrichtung für die Drehbewegung des Kopfes bewirkt.

5. Werkzeugmaschine nach Anspruch 4, dadurch gekennzeichnet, dass nach einer Verzögerung von einem Bruchteil einer Sekunde die Antriebseinrichtung für die Drehbewegung des Kopfes erneut ausgelöst und die bewegliche Scheibe erneut bis zum Kontakt mit dem unbeweglichen Anschlag zu einer Drehbewegung angetrieben wird.

6. Werkzeugmaschine nach einem der Ansprüche 4 und 5, dadurch gekennzeichnet, dass die Auslösung eines Verstellweg-Schalters mit einer Verzögerung die Einführung der ausdehnbaren Ringe in die Bohrungen der Scheiben bewirkt.

7. Werkzeugmaschine nach einem der vorangehenden Ansprüche, dadurch gekennzeichnet, dass das Hubende der Zylinderstangen, das die Einführung der ausdehnbaren Ringe bewirkt, einen Schalter auslöst, der den Stop des Antriebs für die Drehbewegung des Kopfes und die Auslösung der Blockiervorrichtung für den Kopf steuert, während das Herausziehen der ausdehnbaren Ringe aus den Bohrungen einen elektrischen Schalter betätigt, der die Entblockierung des drehbaren Kopfes bewirkt und den Antrieb für die Drehbewegung des Kopfes freigibt.

8. Werkzeugmaschine nach einem der vorangehenden Ansprüche, dadurch gekennzeichnet, dass dass ein ringförmiger, mit hydraulischem Druck beaufschlagter Zylinder die Blockierung des Kopfes auf seiner Auflage mit einer Kraft sicherstellt, die grösser ist als die beim Einsatz der Maschine auftretenden Kraftkomponenten, wobei in der Druckversorgung des Zylinders ein Rückschlagventil angeordnet ist.

9. Werkzeugmaschine nach einem der vorangehenden Ansprüche, dadurch gekennzeichnet, dass der Drehantrieb des Kopfes über einen Hydraulikmotor und ein Zahnradgetriebe erfolgt, das ein Ritzel antreibt, welches seinerseits mit einem vom Kopf getragenen Zahnkranz in Eingriff steht.

**Claims**

1. A machine-tool of the type having a rotary spindle-holder head, of which the rotation and locking into at least two precise indexing positions are automatically controlled, comprising a head (1) rotating on its support (4) along a planar face perpendicular to the rotation axis (3) having the shape of a planar mobile disk (10) solid with the head (1) sliding upon a planar fixed disk (11) solid with the support (4), the fixed disk being drilled with bore holes and the mobile disk, solid with the head, being drilled with at least a pair of bore holes, both bores of such a pair having the same diameter and the same spacing between them as those of the fixed disk, means being provided for pressing the head (1) against the support (4) after indexing, characterized in that:

. the fixed disk (11) comprises at most one single pair of diametrically opposed bore holes (12, 13) inside which are sliding a pair of indexing bushings with expansibles sleeves (14) known per se;

. the mobile disk (10) is drilled with at least one pair of diametrically opposed bore holes (12b, 13b), the bore diameters and spacings between axes being absolutely rigorously equal with the fixed disk;

. the mobile disk (10) solid with the head (1) is rotatably driven by means which insure a centering comprising a predetermined free motion;

. rotation stopping means, such as stops, are provided in precisely defined positions and are arranged so as to allow the back-motion of the mobile disk into the indexing position as the expansible sleeves are brought into action;

. indexing is achieved by the simultaneous introduction and expansion of the two expansible sleeves (14) carried by the fixed disk (11) into one of the pairs of holes of the mobile disk, the mobile disk being returned to the indexing position thanks to the free motion provided in the means driving this disk and in the rotation stopping means, in a position corresponding to the rigorous coaxial relationship of one pair of holes of the mobile disk with the single pair of holes of the fixed disk.

2. A machine-tool according to claim 1, characterized by the expansible sleeves (14) being internally frusto-conical and mounted upon frusto-conical parts (17) carried by the rods (15) of the jacks (16), stopping means (20) being provided to stop the stroke of the sleeves (14) before the end of the stroke of the rods (15) of the jacks (16) carrying the sleeves (14), said stopping means (20) of the sleeves (14) being carried by a rod (21) sliding through the pistons (22) of the jacks (16), the rear end of said rod (21) carrying a collar (24) cooperating at the end of a stroke with a stop (25) carried by the jack cylinder (16).

3. A machine-tool according to either of the above claims, characterized by the indexing disk being provided on their sliding plane with protruding sections which form end stops placed so as to allow the mobile disk (10) to rotate over slightly more than 180° so that the stops contacting each other upon the end of the rotation of the mobile disk move away from each other as a result of the back-motion into position obtained by means of the expansible sleeves (14).

4. A machine-tool according to claim 3, characterized in that two end switches are placed in the support, in registry with the two indexing positions, each switch operating when the stops (29, 30) of the disks are separated by a small distance for bringing to a standstill the device (28) driving the head's rotation.

5. A machine-tool according to claim 4, characterized in that the device driving the head's rotation is reactivated after a calculated delay of a fraction of a second and the mobile disk is again driven in rotation until it makes contact with the fixed stop.

6. A machine-tool according to either of claims 4 and 5, characterized in that the action upon one end switch will cause, with a calculated delay, the introduction of the expansible sleeves into the bore holes of the disks.

7. A machine-tool according to any of the above claims, characterized in that the completion of the stroke of the jack rods causing the introduction of the expansible sleeves will activate a switch controlling the stopping of the head rotation drive and the action of the head blocking device, while the extraction of the expansible sleeves out of the bore holes will act upon an electric switch causing the unblocking of the rotary head and will enable the head rotation drive to operate.

8. A machine-tool according to any of the above claims, characterized in that an annular jack fed with hydraulic pressure will insure the blocking of the head upon its support with a force larger than the components of the forces resulting from the machining stresses, a retaining valve being provided in the feedline of said jack.

9. A machine-tool according to any of the above claims, characterized in that the rotation of the head is driven by a hydraulic motor and a reduction gear driving a pinion acting upon a crown gear carried by the head.

*Fig.1*

0 070 208

Fig. 2

Fig. 3

*Fig. 4*

*Fig. 5*

*Fig. 6*

0 070 208

Fig. 8

Fig. 9

15